# EUROPEAN PATENT APPLICATION

(11) **EP 2 704 454 A1**
(43) Date of publication of application: **05.03.2014**
(21) Application number: 13164980.8
(22) Date of filing: 23.04.2013
(51) Int. Cl.: H04W 4/00, H04W 28/02, H04W 28/16, H04L 12/911

(54) **Method for Optimization of Mobility Awareness in Mobile Networks**

(30) Priority: 24.04.2012 ES 201230605
(71) Applicant: Vodafone IP Licensing Limited, The Connection Newbury Berkshire RG14 2FN (GB); Vodafone España, S.A.U., 28108 Alcobendas (ES)
(72) Inventor: Alves, Ricardo, 28108 Alcobendas (ES); De Pasquale, Andrea, 28108 Alcobendas (ES); Dominguez Romero, Francisco Javier, 28108 Alcobendas (ES)
(74) Representative: Boult Wade Tennant

(57) **Abstract**

The invention relates to a method and a network entity to manage the establishment of data connections of a user terminal allocated in a mobile communications network.

## Description

### FIELD OF THE INVENTION

The invention relates wireless communication networks, especially a way of improving the perceived quality of service offered to customers as well as improving the network's efficiency when providing mobility sensitive applications to customers.

### BACKGROUND ART

With the success of smart-phones and the spread of high speed mobile telecommunications networks that allow fast access to the internet and high speed data transfer, the use of telephones has expanded and deepened beyond conventional usage in voice calls and text messaging.

Allowing people to place voice calls remains important but now joins a richer range of functionalities: modern smart phones offer functionalities more conventionally associated with general purpose personal computers, providing a plurality of applications and assuming constant direct access to the Internet. Moreover, general purpose personal computers may use Wireless Wide Access Network (WWAN) adaptors (e.g. 3G modems) to connect to the Internet instead of (or in addition to) using wired or Wi-Fi connections.

Among the applications offered by smart-phones, some of the most successful ones take advantage of location data, for example: the user may receive relevant information about places and events happening in his/her vicinity; the user may be able to locate his/her preferred places and navigate his/her way there; or he may wish to determine his location in order to share that information with a restricted group of people.

Mobility - for instance, when a mobile device is being used while the user is on board a moving train - gives rise to additional stresses on the maintenance of wireless connectivity. In particular, cellular telecommunications standards seek to provide seamless continuity in the provision of such connectivity even when a mobile terminal transits from the coverage of one cell to the next: in doing so the network, typically the radio network controller (RNC), infers (for example from signalling patterns and/or cell reselection related requests) that certain terminals are "mobile" and may treat such terminals differently.

Certain applications (and not only those that use location data) are particularly sensitive to mobility or to the different treatment offered by the network to terminals identified as "mobile". These applications may need a higher allocation of resources (e.g. a higher bit-rate) for an optimal behaviour than can typically be offered to a moving terminal.

However, since the use of positioning and additional GPS services was a further improvement of the 3G networks not originally foreseen or planned when the standards were firstly defined, the protocols to handle the data needed by these applications (so called mobility sensitive applications) are still evolving and developing. Applications that are known to be mobility sensitive can be identified by packet inspection of the messages they generate and/or receive and comparison with a table of application types: typically the headers of the data packets that constitute the messages will include suitable identification of the type of application they are associated with.

Nowadays, customers making use of mobility sensitive applications are treated in the same way irrespectively of whether they are static or moving. Needless to say that a user on the move may experience greater problems when using these applications than a user staying within the same cell coverage area: this may for example be due to the fact that when a handover among cells happens, the new active cell(s) may not have enough capacity to offer the same quality of service to the user.

### SUMMARY OF THE INVENTION

In accordance with an aspect of the invention, there is provided a method for managing and establishing data connections in a user terminal connected to radio telecommunications network. The method of the invention is based on the control and analysis of data connections generated by data flow required by the so called sensitive applications; said applications need a constant or maintained bitrate.

Therefore the method of the inventions allows the establishment of data connections based on the following conditions:
- The user terminal is in mobility,
- It is using at least one mobility sensitive app, and
- Cross check against a priority level in the QoS,

The invention seeks to provide a method that offers a better quality of service to the user, taking account of whether the user is in motion while improving the network efficiency at the same time.

This is done by implementing a quality of service QoS policy that adopts an additional parameter, "user mobility", to define the priority a customer is given in order to establish data connections.

In accordance with a further aspect of the invention, there is provided a network entity for carrying out the above mentioned method.

### BRIEF DESCRIPTION OF THE DRAWINGS

For a better understanding of the invention, a set of drawings is provided. Said drawings form an integral part of the description and illustrate a preferred embodiment of the invention. The drawings comprise the following figures:
Figure 1 shows a schematic representation of a 3G Radio Access Network.
Figure 2 shows two users in the said network, one in mobility and one static.

### DESCRIPTION OF PREFERRED EMBODIMENTS OF THE INVENTION

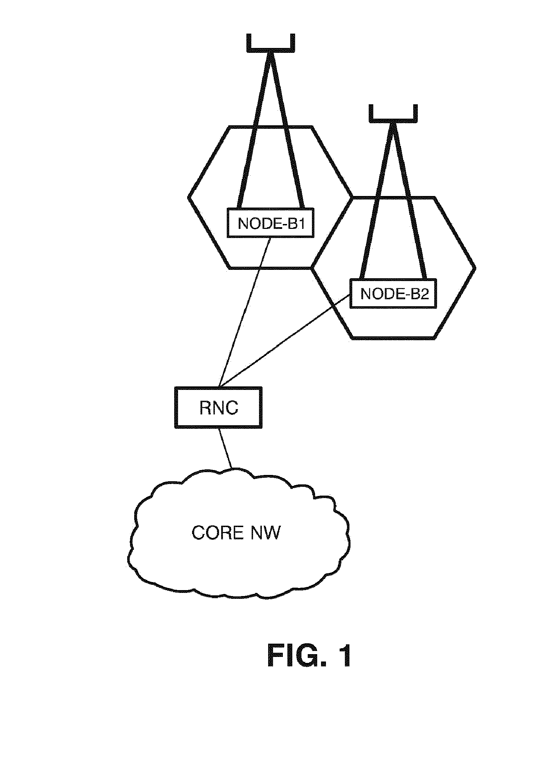

Figure 1 shows a typical example of a 3G Radio Network, with a Radio Network Controller (RNC) and 2 Node-Bs.

The Node-Bs are the responsible of the Radio Interface to connect with the mobile terminals, while the RNC controls the overall process, resources and capabilities of the Radio Network, this being the Radio network node in communication with the Core Network.

RNCs are designed to reduce the workload in the Core Network, and they can manage all the resources in the radio part, deciding which resources are available on each cell and how to manage them, when a cell may be in congestion and what is the most efficient way of solving that problem, and also handles the processes related to the different handovers that take place when a user is in mobility.

With the networks as they are configured now, there are two parameters used for deciding a customer's priority, these parameters being whether the application is a mobility sensitive application or non-mobility sensitive application (a fact that is determined by packet inspection of the application signalling) and the customer's level in QoS (Quality of Service). Using these two parameters the customer's priority is decided and the network assigns more or less resources to him/her.

The following policy table (1.1) shows a typical way of deciding customers' prioritization:

**Table 1.1: Current customers' priority**

| **Type of Traffic** | **QoS** | **Priority** |
|---|---|---|
| Mobility Sensitive apps | Gold | **1** |
| Non-Mobility Sensitive apps | Gold | **2** |
| Mobility Sensitive apps | Silver | **3** |
| Non-Mobility Sensitive apps | Silver | **4** |
| Mobility Sensitive apps | Bronze | **5** |
| Non-Mobility Sensitive apps | Bronze | **6** |

From the table above, it is evident that the customer's priority depends mostly on his/her associated QoS, the table following a hierarchical order.

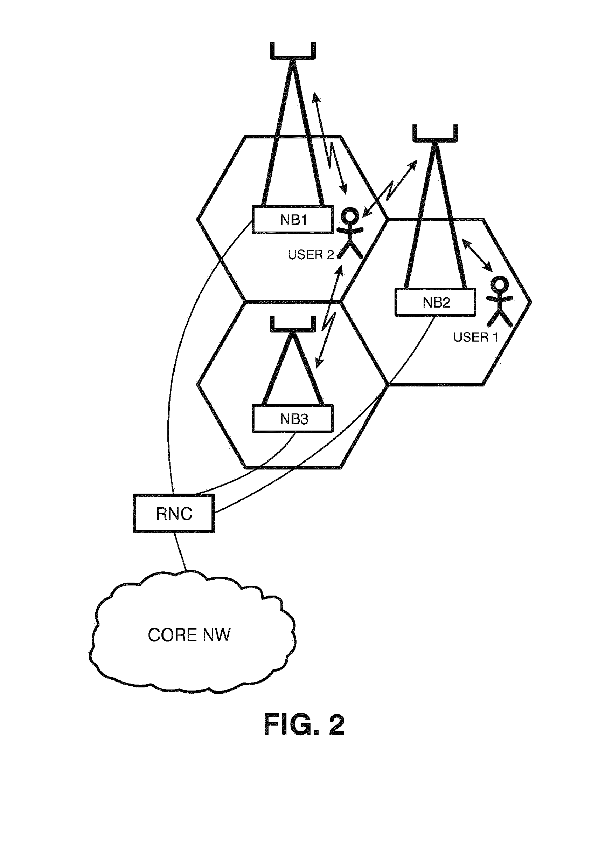

Figure 2 shows two users in said network, one in a static situation and the other one on the move.

When a customer being static uses his/her cell phone in such a network, the phone gets resources from one or more cells in a Node B, the amount of resources (bit-rate connection) depending on the nature of the service he/she is making use of and of the customer's priority. 3G Networks allow User Equipments (mobile phones, computers with 3G adaptors or any other device with 3G access capabilities) to be connected to a plurality of cells to improve the service and reception quality. The cells the User Equipment is connected to are stored in the Active Set list.

The User Equipment is constantly monitoring other cells to decide whether any other cells should enter into the Active Set list or whether any cell present in said Active Set list should be deleted from it and the radio link between it and the User Equipment removed.

If the User Equipment detects a candidate cell to be included in the Active Set list, it informs the network of it. Should the candidate cell belong to the same Node B than the current serving cell(s) the User Equipment is connected to, the radio link between the new cell and the User Equipment is directly added. This process is known as softer handover.

However, if the cell belongs to a different Node-B than the one the User Equipment is being served from, a full handover process is started in the RNC. This process is called soft handover. It is called "soft" because at all times there is always at least one radio link established between the User Equipment and the Radio Network.

In this case the User Equipment is connected to at least two different Node-Bs, with the combining being done at the RNC level.

When a customer is static while using his/her User Equipment, the Active Set list will remain stable, with the same active cells in the list during the whole communication process, unless congestion happens in any of the cells and the network forces one or more cells to release resources.

However, when the customer is moving while making use of his/her User Equipment, the monitoring process to find better suitable cells becomes critical and the serving cells will change throughout the whole process.

In this case the User Equipment monitors which are better cells for it to connect to, and informs the Radio Network of the results and the desired cells to be added to the Active Set list. The RNC then evaluates the data received from the User Equipment and decides which cells should be added to the Active Set, informing the corresponding Node-Bs of the resources they should allocate for the new radio links to be established with the User Equipment.

As already said, the allocated resources depend on the customer's priority and the nature of the service the User Equipment is using.

However, there are nowadays applications that because of the nature of the data they need are sensitive to mobility. These applications may need a higher allocation of resources (e.g. a higher bit-rate) for an optimal behaviour, but it may happen that these resources are allocated to other users with higher QoS but who are not moving, for example real time video chat, HD video streaming, and so on.

The method herein described comprises the step of determining whether the User Equipment is running a using a mobility sensitive application; i.e. a lookup table comprising a certain number or applications which are known to be sensitive to mobility conditions, or checking the data flow based on application requirement in general, hence video chat applications require a certain bitrate and data flow, so once a video chat application such as Apple's Facetime, Skype or Tango is detected the method of the invention knows this a sensitive application requiring a certain data flow rate.

In order to have a more efficient allocation of resources, the current invention suggests the creation of a new parameter to be taken into account when deciding which resources to allocate to a User. This new parameter is whether the User Equipment is in mobility or static.

The use of an additional parameter of user mobility allows the operator to alter the priority offered to "mobility" users. Thus a new policy may grant higher priority to "mobility" users than to users with higher QoS but static and/or not using mobility sensitive applications.

The following table (1.2) illustrates one possible policy arrangement of customers' priorities when the additional parameter is also used in the calculations (contrast this policy arrangement with that illustrated in table 1.1:

**Table 1.2: Proposed customers' priority**

| **Type of Traffic** | **User Mobility** | **QoS** | **Priority** |
|---|---|---|---|
| Mobility Sensitive apps | Yes | Gold | **1** |
| Mobility Sensitive apps | No | Gold | **3** |
| Non-Mobility Sensitive apps | Yes/No | Gold | **3** |
| Mobility Sensitive apps | Yes | Silver | **2** |
| Mobility Sensitive apps | No | Silver | **5** |
| Non-Mobility Sensitive apps | Yes/No | Silver | **5** |
| Mobility Sensitive apps | Yes | Bronze | **4** |
| Mobility Sensitive apps | No | Bronze | **6** |
| Non-Mobility Sensitive apps | Yes/No | Bronze | **6** |

As the table 1.2 shows, customers with a QoS of Silver but being in mobility and using mobility sensitive applications are assigned a higher priority than customers with higher QoS (gold) but not moving or using non-mobility sensitive applications. The same happens for customers with a QoS of Bronze that have a higher priority than Silver static customers or Silver customers using non-mobility sensitive applications.

Therefore, the process is as follows:

A customer is using an application on his/her User Equipment.

The User Equipment has at least one radio link established with at least one cell, the active cells being registered in the Active Set list.

The RNC (the relevant network entity) uses packet inspection to detect whether the application used is mobility sensitive.

The User Equipment monitors neighbouring cells to detect whether there are better suitable cells to establish radio links with.

If at least one cell (belonging to a different Node-B the User Equipment is connected to) is found, the User Equipment informs the RNC about it.

The RNC determines whether the user is in mobility, based on the amount of handover requests it has received from that User Equipment.

The RNC retrieves the QoS associated to that User Equipment from the corresponding database.

Based on the calculated and retrieved parameters (mobility sensitive application, User Equipment mobility and QoS), a priority list for User Equipments is established, wherein customers in mobility (having a User Equipment that is moving) and using mobility sensitive applications are given a higher priority than customers with higher QoS but not moving and/or using non-mobility sensitive applications.

Higher resources are allocated to customers with higher priorities, meaning that higher bit-rate connections (greater bandwidth) are established with User Equipments with higher priorities.

Since the whole process of assigning the priority is done at RNC level, not in the Core Network, there is the additional improvement of having local routing enhancement, deciding whether network caching of contents and internet offload at the Node B should be, all these decisions being taken in the Radio Network, the Core Network being transparent to these decisions and not getting any additional workload.

In order to carry out the method described above, the object of the invention also details a network entity able to accomplish each step of the method of the invention thus establishing data connectivity for at the least one user equipment allocated in the mobile telecommunications network. Said network identity is furnished with a packet inspector module which inspects the content of data packets of traffic data generated by the user equipment, this packet inspector module performs the packet inspection of the application signalling and may also perform a check of an amount of handovers generated by the user terminal. A mobility detection unit of the network entity determines whether the user equipment is in mobility or not, since the method of the invention is based on both the mobility and the kind of application used in order to manage data connections, the network entity is also equipped with access module for accessing subscriber QoS data from a QoS database, said database is accessible within the mobile telecommunications network; by accessing said database the entity facilitates connectivity at a selected level of QoS, said QoS being determined by a policy table.

As already stated before sensitive applications require a constant bitrate, that is the reason why the network entity may be equipped with a bitrate checker module to determine applications requiring a minimum constant bitrate, said bitrate checker module might either comprise or access a lookup table with a list of sensitive applications.

## Claims

1. Method for establishing data connectivity for at least one user equipment the method comprising, in a network entity of a mobile telecommunications network, the steps of:
• performing a packet inspection of traffic data generated by the user equipment,
• determining whether the user equipment is running a mobility sensitive application said determination being based on an analysis of the traffic data retrieved during the packet inspection,
• retrieving QoS data related to said user equipment from a database accessible by said network entity, and
• assigning a priority level selected from a plurality of priority levels resulting from the determination of whether the user terminal is found to:
○ be in mobility,
○ be using at least one mobility sensitive app, and
○ have a high priority level in the QoS,
wherein the method further comprises allocating a bit-rate level to said user terminal according to the priority level assigned to said user terminal, where a higher bit-rate level is assigned to a higher priority level.

2. Method according to claim 1 wherein the network entity is a RNC.

3. Method according to claim 1 wherein the network entity is a node B where the mobile terminal is allocated.

4. Method according to claim 1 wherein the mobility sensitive application is an application that requires a minimum constant bitrate.

5. Method according to claim 1 further comprising determining whether the user equipment is in mobility by checking the amount of handovers generated by said user terminal when the packet inspection takes place.

6. A network entity for establishing data connectivity for at least one user equipment of a mobile telecommunications network, comprising:
• a packet inspector module which inspects the content of data packets of traffic data generated by the user equipment,
• a mobility detection unit for determining whether the user equipment is in mobility, access module for accessing subscriber QoS data from a QoS database accessible within the mobile telecommunications network, and
• wherein the entity facilitates connectivity at a selected level of QoS, said QoS being determined by the policy table.

7. Network entity according to claim 6 wherein the packet inspector module is further adapted to perform a check of an amount of handovers generated by the user terminal.

8. Network entity according to either claim 6 or 7 further comprising a bitrate checker module adapted to determine an application that requires a minimum constant bitrate.

9. Network entity according to claim 8 wherein the bitrate checker module comprises a lookup table with a list of sensitive applications.
